# EUROPEAN PATENT SPECIFICATION

(11) **EP 0 457 940 B1**
(45) Date of publication and mention of the grant of the patent: **03.01.1996**
(21) Application number: 90109653.7
(22) Date of filing: 21.05.1990
(51) Int. Cl.: G06F 9/445

(54) **Activating circuit**
Aktivierungsschaltung
Circuit d'activation

(43) Date of publication of application: 27.11.1991
(73) Proprietor: Hewlett-Packard GmbH, D-71004 Böblingen (DE)
(72) Inventor: Dräger, Jürgen, D-72070 Tübingen (DE); Paret, Günter, D-71083 Herrenberg (DE)
(74) Representative: Kurz, Peter

(56) References cited:
- EP-A- 0 217 351
- EP-A- 0 338 290
- WO-A-85/02310
- DE-A- 3 417 143
- US-A- 3 984 637

## Description

This invention relates to an activating circuit for an electronic device, said electronic device containing a processor and a memory and operating at least partially under program control, the activating circuit comprising:
- a processor,
- a nonvolatile, erasable memory,
- connections means for connecting said activating circuit with the electronic device,
- a program stored in the nonvolatile, erasable memory, said program controlling said activating circuit and containing:
   - a first module setting up a communication with the electronic device, and
   - a second module set up to transmit data and/or code to the electronic device,
as e.g. disclosed in European Patent Application EP-A-338 290.

A multiplicity of electronic devices, such as measuring devices, medical monitors or test devices, perform their functions nowadays under control of a microprocessor. Although the measurement pickups - e.g. the test probe and the input amplifiers of an oscillograph or of a data bus analyzer, or the electrodes and the preamplifiers of a medical monitor - still consist of analog electronics, more complex functions are performed by the microprocessor. Such functions include the guidance of the user through menus, windows or other techniques, complex mathematical or statistical operations, the presentation of certain measurement results (e.g. special graphics or the like), software filters (i.e. software processing of data converted from analog to digital format), control of certain hardware components such as the amplification of an amplifier stage, setting the bandwidth of a hardware filter, control of an analog-to-digital converter, and the like. The microprocessor further controls the communication between certain components, e.g. PC boards or integrated circuits, of a system and the interfacing capabilities of the device (most devices of state of the art technology have the capability to communicate over standardized digital interfaces).

These examples illustrate that a processor controlling an electronic device provides multiple complex functions. Therefore, the programs necessary for the processor are also very extensive and complex.

However, implementation of such extensive software functions has caused new tasks and problems. For example, it is well-known in the art that an extensive program package is seldom completely free of software errors (so-called "bugs"). Although most software manufacturers try to test their programs under as many as possible and practically occurring conditions, it is simply impossible to test all combinations, external events and the like, particularly conditions which occur very seldom. Therefore, every complex program needs service; whenever one of these bugs has been detected, it has to be identified and corrected ("fixed"). The corrected program has then to be installed instead of the older version. This is the reason why most software suppliers, e.g. suppliers of operating systems, provide so-called "updates" to their programs. In the updated version, the bugs detected up to a certain point in time have been fixed.

Another reason for a software update may be that new features have been added to the existing program. For example, such new feature could include the support of a new interface, or the capability of the device to communicate with the user in another language. Such new feature may, of course, include free software updates as well as features which are sold as an option to the existing device (e.g. support of an additional pick-up).

Another case where additional program functionality is required is when an extensive test of the electronic device is to be carried out. Customary monitors and measuring instruments contain some test programs, e.g. a self-test of the memory and the input/output ports which is carried out when power is turned on. However, it is not possible or at least not economical to provide test software for all and every tests, in particular very special tests, in the standard software of the electronic device. Therefore, from time to time it is necessary to load special or extensive test programs in such devices.

In the field of large and medium-sized computers, these problems are solved in two different ways:
1. In many cases, e.g. if the operating system needs update, the new or revised programs are implemented by a service technician. The technician carries the new programs to the customer using magnetic media (such as discs or tapes), puts them in a disc drive or a magnetic tape unit and loads the programs into the computer. This is a feasible solution for larger computers as the costs for the personal visit of the service technician are neglectable compared to the value of the whole computer. Further, computer software of this size needs service from time to time anyway, so that a regular service may be combined with the installation of additional or updated software.
2. If the revised, updated or additional programs belong to a less critical environment of the computer (i.e. programs which are not part of or related to the operating system such as application programs), then the programs may also be sent to the customer using magnetic media, and the customer may be asked to install these programs himself.

Unfortunately, these solutions are not suitable or at least not cost-effective for measuring instruments, small computers and the like. The major reason therefore is that the expenses for a service technician's visit are not acceptable compared to the cost of the overall system. Further, the exchange of programs is often quite complicated from a technical standpoint. The reason therefore is that, in most of these devices, the programs are stored as so-called "firmware", i.e. the software is stored in read-only memory chips (ROMs). Therefore, any software change requires that the electronic device is disassembled and that certain memory chips (or even complete printed circuit boards) are exchanged. Even in cases where the device comprises a disc drive or a magnetic tape unit, part of the software (in particular, the basic loading and input/output routines) is stored in ROMs.

On the other hand, as exchanging the ROMs requires disassembly of the device, such exchange can only be performed by a qualified service technician and cannot be left to the customer. Therefore, in regard of the extensive expenses, software updates of the kind described here have seldom been performed.

The situation is even more critical in case of medical devices. In all such devices, it is absolutely unacceptable to have a software update made by the customer as an erroneous operation implies serious danger for the patient. For example, even a minor error could cause distortion of an alarm limit so that the medical device does not initiate an alarm when the patient is in clinically critical condition. This could even lead to the death of a patient. It is needless to say that this cannot be tolerated from a clinical standpoint. As a consequence, software updates incorporating new features have seldom been performed; in case that a software update has been necessary due to detected errors (bugs), such caused enormous costs for the manufacturing company and/or the customer.

A solution using a loading circuit connectable with an electronic device is disclosed in the above mentioned EP-A-338 290. When the loading circuit is connected with the electronic device and power is switched on, programs are downloaded from the loading circuit to an EPROM contained in the electronic device.

It is a major object of the present invention to provide a solution which allows to implement new features or to update the programs in an electronic device, or to run extended test programs, which is technically easy to implement, cost-effective, easy to handle and usually does not require the visit of a service technician.

According to one aspect of the present invention, this is solved by an activating circuit of the kind described above which is characterized in that
- the first module is set up to receive an identification code from the electronic device,
- the first module is set up to store the identification code in the nonvolatile, erasable memory the first time it receives such identification code, and
- the first module is further set up to accept only the stored identification code and to prevent the second module from transmitting data and/or code to the electronic device if the stored identification code and the received identification code are not equal.

The activating circuit may be a separate, small module for connection with the electronic device as will be discussed later. Still there are also a multiplicity of other choices; for example, the activating circuit may also be or comprise a personal computer.

The activating device contains a processor, typically a microprocessor with low power consumption. This processor has access to a non-volatile memory like a ROM (read-only-memory) or an EEROM (electrically erasable read-only-memory); preferably, the memory is integrated in the processor (many customary microprocessors, the so-called "one-chip-microprocessors", offer this feature).

The activating circuit is further set up for connection to the electronic device, preferably via a cable; still there are also other solutions like wireless transmission, as will also be discussed later.

The program contained in the non-volatile memory consists of at least two modules. The first of these modules sets up a communication with the electronic device. This may be a "hand-shake" procedure in asynchronous transmission format. Typically, the activating circuit transmits a start code to the electronic device, and further communication between the activating circuit and the electronic device is then performed according to a predefined protocol. On the other hand, synchronous transmission or other transmission methods are also suitable.

Once the communication between the activating circuit and the electronic device is established, control is transferred to a second module set up to transmit data and/or code to the electronic device. Said second module is actually provided for transmission of the data or the code which adds additional functionality to the device.

There are several possibilities of providing new functions to the processor of the electronic device. First, said data may comprise new programs to be executed by the electronic device's processor. In this case, the new programs (or parts of a new program, or new subroutines for existing programs) are handled by the activating circuit just as data of any other kind, i.e. they are "downloaded" to the electronic device byte by byte. However, the receiving electronic device handles these data as program modules, i.e. stores them in the non-volatile program memory of its processor. During operation, the electronic device's processor executes these programs. There are several ways to ensure that the receiving electronic device treats the received data as programs or program modules; for example, the transmitted data may be identified by some special code as a program, or the communication may be set up in a way that only data representing a program can be transmitted.

Another possibility of adding additional functionality to the electronic device is to activate existing programs or program modules. That is, the program memory of the electronic device's processor already contains the necessary software to perform certain functions upon delivery to a customer, but these programs or program modules cannot be accessed, i.e. are not active. Upon transmission of an activating code, the programs or program modules are unlocked and can now be executed by the electronic device's processor. This is an easy way of adding new functions to the electronic device; as only the activating cod< has to be transmitted, the communication between the activating circuit and the electronic device is very short and easy to implement.

An activating circuit of the kind described above may be used to install additional features in an electronic device - such as a measuring instrument - in a very easy and cost-effective manner. One of the major advantages is that there is no need for a personal visit of a service engineer. This is particularly important for medical technology; the present invention offers for the first time a solution to activate additional features in a medical monitor without a service engineer's personal visit. Further, the activating device is quite cheap to manufacture, particularly if a one-chip-microprocessor is used; instead, the activating device may also be a personal computer or the like which can be used to activate a multiplicity of electronic devices (which is an even cheaper solution). The activating circuit may, depending on each application, be used to transmit program code or an activating code; the purpose may be to add additional functions, special tests and the like.

According to the above discussed aspect of the present invention, the first program module compares an identification code received from the electronic device with an identification code stored in the erasable, non-volatile memory. If no such identification code is stored there, then the received identification code is stored in the memory. On the other hand, if an identification code is found in the memory, it is compared to the received code, and the second module is only activated (i.e. data and/or code is only transmitted) if the identification codes are equal. If they are not equal, operation stops.

Therefore, the activating circuit can only be used to activate one electronic device provided that all electronic devices comprise different identification codes. If the activating circuit has once been connected with an electronic device, it has stored the identification code of this device and therefore can only be used in conjunction with this device in the future. It will not communicate with any other electronic device with a different identification code. It is understood that in such case the activating device's non-volatile memory has to be an erasable memory as the identification code has to be written into the memory the first time such code is received.

The described embodiment offers the opportunity to sell and/or distribute an activating device which is suited to activate one electronic device only. Therefore, for every electronic device to be activated, a separate activating device has to be purchased. For example, the activating device may be a small box containing a one-chip-microprocessor sold together with an operating guide. The customer is not able to use the activating circuit to activate more than one electronic device or to copy the program contained in the activating circuit.

In case a memory or a memory board in the electronic device becomes defective, a service board may be used as replacement which transmits a special service identification code to the activating circuit. Once the activating circuit has received and stored such service identification code, it can be used in conjunction with all electronic devices containing a replacement board. Therefore, it is ensured that even in case of hardware malfunction the exchanged memories contain the same activated functions as were contained in the board which became defective.

Another possibility to ensure that the activating device may be used in conjunction with only one electronic device is to encode the transmitted data in dependency of a certain identification code. The identification code is used as a "key word" for the encoding algorithm. It is understood that, in this case, the activating circuit has to store the first received identification code, too, and to encode the transmitted information in dependency of such stored identification code. The electronic device is only capable of decoding the transmitted information if it contains the same identification code as stored in the activating circuit. According to this solution, the activating circuit may also be used in conjunction with only one electronic device because the others have different identification codes and therefore cannot decode received information. Therefore, this second aspect of the inventive activating circuit is characterized in that
- the first module is set up to receive an identification code from the electronic device,
- the first module is set up to store said identification code in the nonvolatile, erasable memory the first time it receives such identification code,
- the second module is set up to encode the transmitted data and/or code in dependency of the identification code stored by the first module in the nonvolatile, erasable memory.

In another advantageous embodiment, the first module is set up to receive a status code from the electronic device, to compare said status code with a stored update code and to transfer control to the second module only if said status code is in a predefined relation to said update code. The status code may e.g. represent a revision number or the date when the programs were released. In this embodiment, it is impossible that an identification code is stored in the activating circuit - i.e. the activating circuit is disabled for further use with other electronic devices - if the electronic device already containes the activating codes or programs contained in the activating circuit. In other words: If the electronic device already contains the information to be transmitted from the activating circuit, the activating circuit is not "blocked" and can therefore be used to update another electronic device.

As already mentioned, there is a variety of solutions to connect the activating circuit and the electronic device. In a customary solution, the activating circuit is contained in a housing and connected with the electronic device via a cable and a connector. According to this solution, the activating circuit may be sold as a separate part only suited to activate one electronic device. Preferably, the connection is made via a two-leaped serial interface cable. It is advantageous to use a microprocessor, preferably of the one-chip type with integrated non-volatile, erasable memory in this case as this reduces the number of components and therefore the costs.

Still there are a multiplicity of other solutions for connection of the activating circuit with the electronic device. For example, wireless transmission with electromagnetic waves or infrared light may be used. In a further preferred embodiment, the activating circuit comprises a personal computer, and connection is made over telephone lines. This is a very clever way of updating the electronic devices; a simple telephone connection has to be made between the electronic device and the personal computer in a factory, and the activating code or program may be downloaded over the telephone line. This solution requires no extra hardware, and the personal computer may be used to activate any electronic device even in remote distances.

A further preferred solution provides an integrated microprocessor which constitutes the activating device. One-chip-microprocessors with integrated memory, even small ones with only four pins, are available on the market. Such microprocessor is inserted in a socket in the electronic device and transmits the necessary code to activate the wanted feature. It is particularly advantageous if the socket is placed behind a small door (which is normally closed) of the electronic device. In this case - as there is no need to open whole electronic device -, the microprocessor may be inserted by the customer which makes installation considerably cheaper.

In case a one-chip-microprocessor is used, this processor is preferably of the low power consumption type. It is even possible that the processor receives the energy necessary for operation from the received data pulses.

The invention will now be described by means of a non-limiting example and with reference to the accompanying drawings in which:
Fig. 1 depicts a first embodiment of the invention, the activating circuit being contained in a box and prepared for connection by means of a cable,
Fig. 2 depicts a second example with wireless transmission,
Fig. 3 depicts a third embodiment in which the connection is made via telephone lines,
Fig. 4 depicts a fourth embodiment in which the activating circuit comprises a one-chip-microprocessor,
Fig. 5 depicts detail V of Fig. 4 and
Fig. 6 is a flow chart of the basic operation of an activating circuit.

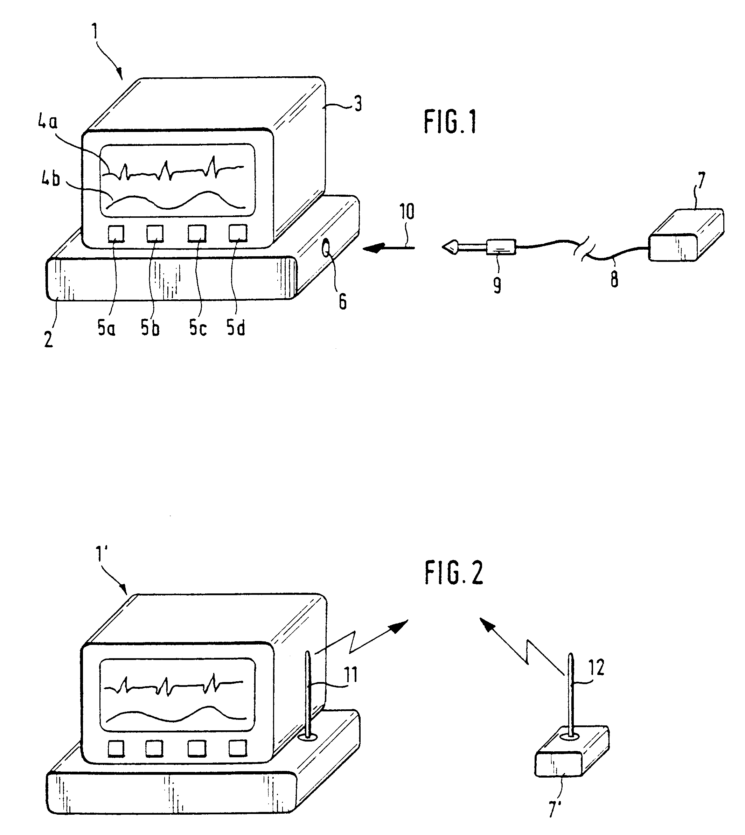

Fig. 1 depicts a medical monitor generally outlined as 1. The monitor consists of a box 2 and a display 3. Box 2 contains the necessary hardware like preamplifiers and analog signal processing circuits, the digital components, at least one microprocessor and the circuitry necessary to operate this processor, particularly certain memory circuits. The details of the front-end connection, in particular the transducers and their connection to box 2, are not shown in Fig. 1.

Display 3 is used to present the results of the various measurements. For the purpose of illustration, an ECG (Electrocardiogram) wave 4a and a blood pressure waveform 4b are depicted in Fig. 1.

Display 3 further comprises several keys provided for user interaction. Some of these keys are labelled as 5a to 5d in Fig. 1. It is understood that an actual monitor provides more than the four keys shown in Fig. 1.

Operation of medical monitor 1 is controlled by its internal processor. This processor performs a variety of functions, e.g. wave form filtering and digital signal processing, setting of alarm limits and generating an alarm when such limit is exceeded, lead selection if an ECG is displayed, communication with a recorder or a remote station and so on.

Medical monitor 1 further comprises a jack 6, the function of which will be explained below.

Due to the multiplicity of program-controlled functions and the large amount and the complexity of the software provided for the operation of the processor or the processors controlling medical monitor 1, the need arises to change or update the programs contained in the memories of medical monitor 1 from time to time. Such may e.g. be the case if software containing a programming error ("bug") is to be exchanged, if new programs necessary to operate a new medical parameter or a new kind of data processing has to be added (or, if already present, has to be activated), or if special tests have to be performed.

Fig. 1 further shows an activating circuit, here in form of a box 7. Box 7 contains a one-chip-microprocessor and the necessary peripheral hardware to control this processor as well as a serial interface. Said interface is connected with a cable 8 which ends in a connector 9.

Box 7 is preferably used to add additional functionality to the programs contained in medical monitor 1, i.e. to provide new programs to this monitor. Box 7, cable 8 and connector 9 are separately sold in form of an "update kit" containing these components as well as an instruction sheet.

The customer needs simply to connect box 7 with medical monitor 1, i.e. to put connector 9 in jack 6 as depicted by arrow 10. The memory provided with the microprocessor contained in box 7 comprises at least two modules, the first establishing a communication with medical monitor 1 and the second transmitting program code to said monitor. Once the first module has established the communication between the two devices, it transfers control to the second module which downloads the additional program code to medical monitor 1. The processor of monitor 1 is now able to execute the new program code, i.e. to establish the new functions provided by the downloaded programs.

It is understood that box 7 cannot only be used to download new programs, but also to activate programs which were already contained, but "hidden" in the software of medical monitor 1. Further, instead of adding new functionality, the downloaded programs or activating codes may be used to install or start special test sequences. Last not least, box 7 may also be used to exchange software containing a bug.

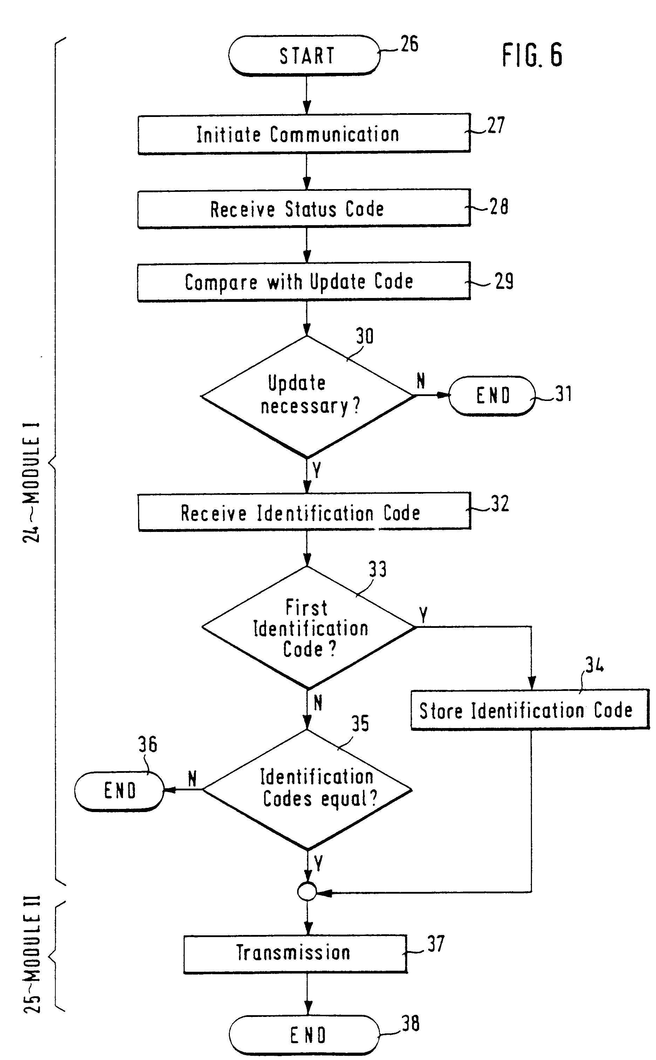

The first module contained in box 7 may further comprise certain controlling functions ensuring that box 7 can only be used with one medical monitor. The operation of such controlling sequences will be explained by means of Fig. 6.

Another environment is depicted in Fig. 2. Medical monitor 1' is equipped with an antenna 11, and box 7' is also equipped with another antenna 12. In this example, communication between the medical monitor and the activating circuit as well as program/code download is performed using wireless transmission with electromagnetic waves. The other components of the medical monitor and the box may be similar as in the environment of Fig. 1. It is understood that wireless transmission may also be performed using infrared light or the like.

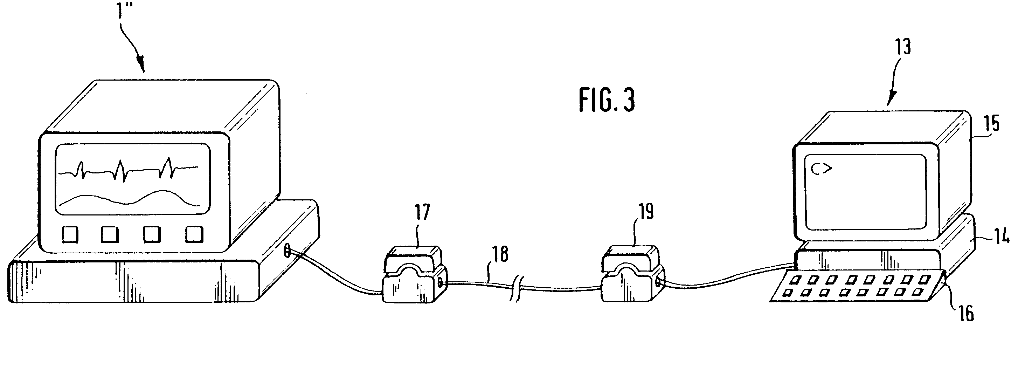

Fig. 3 shows a further environment in which the activating circuit comprises a personal computer 13. The personal computer consists of computer box 14, display 15, keyboard 16 and other common components such as disc drives, a mouse etc. (not shown in Fig. 3).

Personal computer 13 as well as medical monitor 1" contain modems. Communication between the two devices is set up from the modem of monitor 1" to a telephone 17, a telephone connection 18 and a second telephone 19 to the modem of personal computer 13 and vice versa.

The environment depicted in Fig. 3 is especially suited if a program needs updating, i.e. if a software bug has been detected and the program has to be exchanged with a new revision in which these errors have been corrected. The environment of Fig. 3 allows to load the revised program on a multiplicity of monitors without the need to send a service engineer to every customer in possession of a monitor. Personal computer 13 is located in the manufacturer's building and may be used to update all monitors already distributed even if they are located in very remote places.

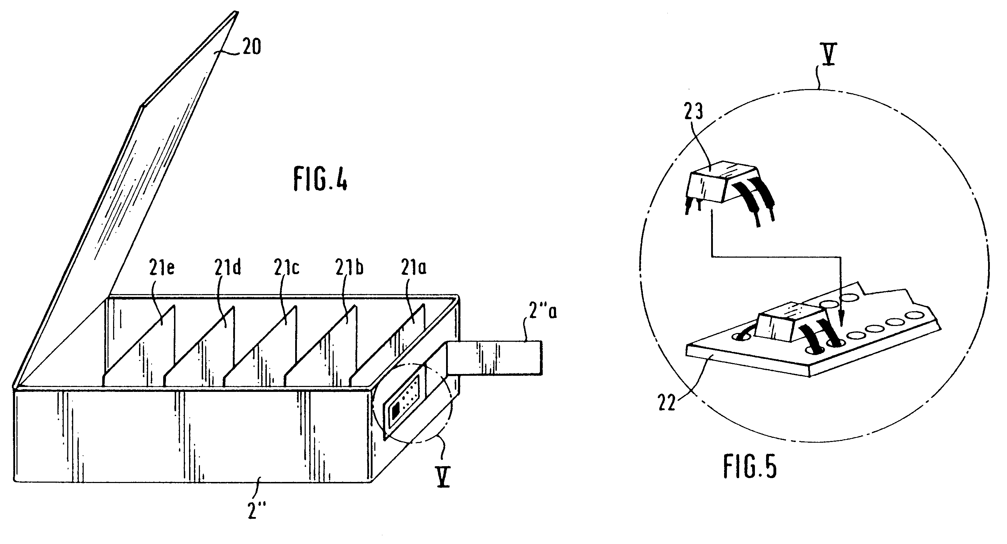

Fig. 4 depicts a hardware box 2" corresponding to hardware box 2 of medical monitor 1 in Fig. 1. For the purpose of illustration, cover 20 of this box is drawn in its open position. The hardware box contains a multiplicity of printed circuit boards 21a to 21e.

Detail V of this figure is drawn in larger size in Fig. 5. Board 21a comprises an integrated circuit socket 22 which operates as connection means to the medical monitor. The activating circuit consists of a very small one-chip-microprocessor 23 with four pins (one for the supply voltage, one for ground, one for transmission and one for receive operation). Microprocessor 23 is delivered as an option to the medical monitor and is able to transmit program or activating codes according to the principles described herein. Socket 22 is normally hidden behind a small door 2"a. In order to install microprocessor 23, door 2"a has to be opened, and microprocessor 23 has to be inserted into socket 22. As box 2" has not to be opened completely for this purpose, installation can be performed by the customer without the danger of causing electrical malfunction, particularly if socket 22 is appropriately isolated.

It is understood that the environment of Figs. 4 and 5 is particularly useful if new functionality is to be added, especially if certain programs are already "hidden" in the monitor and can be activated by an activating code transmitted by microprocessor 23.

Fig. 6 is a flow chart explaining the basic operating mode of the processor contained in the activating circuit. Two modules 24 and 25 perform data exchange between the activating circuit and the electronic device. Upon startup (reference number 26), module I initiates the communication with the electronic device (reference number 27). The next step is that the activating circuit receives the status code from the electronic device (28). This status code represents the status of the programs contained in the electronic device, either as a date code or as a revision number. The purpose of the status code is to ensure that programs or activating codes are only downloaded if the electronic device has not yet received the updated programs from another activating circuit. This is particularly important if the activating circuit is prepared to communicate with one electronic device only because otherwise it may happen that a program is downloaded to an electronic device which already contains the downloaded programs - i.e. the transmission is useless -, and the activating circuit cannot be used in conjunction with another electronic device thereafter.

In step 29, the received status code is compared with the update code contained in the activating circuit, and in step 30 a decision is made whether an update is necessary in the light of the foregoing comparison. For example, if the status code and the update code contain the same date or revision number, this means that the electronic device's memory already contains the program which is to be downloaded, and therefore operation stops (reference number 31).

If it is decided that the programs in the electronic device need to be updated, operation continues with step 32, i.e. the activating circuit receives an identification code from the electronic device. The identification code is a code unique for each electronic device, for example its serial number.

A decision is then made (step 33) whether this is the first identification code ever received by the activating circuit. If the answer is "yes", then this identification code is stored (step 34). If the answer is "no", the processor in the activating circuit checks whether the received identification code and the stored identification code are equal (step 35). In case they are not equal, this means that the activating circuit has already been used in conjunction with another electronic device and therefore cannot be used together with the present one. In this case, operation stops (step 36).

It has to be emphasized that usually, if the identification codes are equal, this means that the electronic device has already received the new programs and that therefore, as the status code and the update code comply with each other, operation stops already at step 31. However, it may happen that a defective memory in the electronic device has been exchanged and that therefore a new download procedure may be necessary.

In case the activating circuit has received the first identification code or in case that the identification codes are equal, control is transferred to module II which handles the transmission and data exchange between the activating circuit and the electronic device (step 37). This transmission is performed in known manner, i.e. using a handshake procedure. When all program, test or activating codes have been transferred to the electronic device, operation stops (step 38).

## Claims

1. Activating circuit (7,7',13,23) for an electronic device (1,1',1",2"), said electronic device (1,1',1",2") containing a processor and a memory and operating at least partially under program control, said activating circuit (7,7',13,23) comprising:
(1.1) a processor,
(1.2) a nonvolatile, erasable memory,
(1.3) connections means (10,11,12,17-19,22) for connecting said activating circuit (7,7',13,23) with said electronic device (1,1',1",2"),
(1.4) a program stored in said nonvolatile, erasable memory, said program controlling said activating circuit (7,7',13,23) and containing:
(1.4.1) a first module (24) setting up a communication with said electronic device (1,1',1",2"),
(1.4.2) a second module (25) set up to transmit data and/or code to said electronic device (1,1',1",2"),
characterized in that
(1.5) said first module (24) is set up to receive an identification code (32) from said electronic device (1,1',1",2"),
(1.6) said first module (24) is set up to store said identification code (34) in said nonvolatile, erasable memory the first time it receives such identification code, and
(1.7) said first module (24) is further set up to accept only the stored identification code and to prevent said second module (25) from transmitting data and/or code to said electronic device if the stored identification code and the received identification code are not equal.

2. Activating circuit (7,7',13,23) for an electronic device (1,1',1",2"), said electronic device (1,1',1",2") containing a processor and a memory and operating at least partially under program control, said activating circuit (7,7',13,23) comprising:
(2.1) a processor,
(2.2) a nonvolatile, erasable memory,
(2.3) connections means (10,11,12,17-19,22) for connecting said activating circuit (7,7',13,23) with said electronic device (1,1',1",2"),
(2.4) a program stored in said nonvolatile, erasable memory, said program controlling said activating circuit (7,7',13,23) and containing:
(2.4.1) a first module (24) setting up a communication with said electronic device (1,1',1",2"),
(2.4.2) a second module (25) set up to transmit data and/or code to said electronic device (1,1',1",2"),
characterized in that
(2.5) said first module (24) is set up to receive an identification code (32) from said electronic device (1,1',1",2"),
(2.6) said first module (24) is set up to store said identification code (34) in said nonvolatile, erasable memory the first time it receives such identification code,
(2.7) said second module (25) is set up to encode the transmitted data and/or code in dependency of the identification code stored by said first module (24) in said nonvolatile, erasable memory.

3. Activating circuit according to claim 1 or 2, characterized in that said second module is set up to transmit program code to said electronic device (1 ,1',1",2").

4. Activating circuit according to claim 1 or 2, characterized in that said second module is set up to transmit an activating code to said electronic device (1,1',1",2").

5. Activating circuit according to claim 1 or 2, characterized in that said second module is set up to transmit a test code or program to said electronic device (1,1',1",2").

6. Activating circuit according to at least one of claims 1 to 5, characterized in that said first module (24) is set up to receive a status code (28) from said electronic device (1,1',1",2"), to compare said status code with a stored update code (30) and to transfer control to said second module (25) only if said status code is in a predefined relation to said update code.

7. Activating circuit according to claim 6, characterized in that said first module (24) transfers control to said second module (25) only when said status code indicates a lower revision number or an earlier date than said update code.

8. Activating circuit according to at least one of the preceding claims, characterized in that said activating circuit (7,7') is contained in a housing and that said connection means comprises a cable (8).

9. Activating circuit according to claim 8, characterized in that said activating circuit (7,7') comprises a microprocessor, preferably of the 1-chip type with integrated nonvolatile, erasable memory.

10. Activating circuit according to at least one of claims 1-7, characterized in that said activating circuit comprises a computer (13), preferably a personal computer, and that said connection means comprises a telephone or a wireless transmitter.

11. Activating circuit according to at least one of claims 1-7, characterized in that said activating device comprises an integrated microprocessor (23) and that said connection means comprises a multiplicity of pins of said integrated microprocessor (23) for insertion in a socket (22) in said electronic device (2").

12. Method for activating or adding new capabilities to an electronic device (1,1',1",2") operating at least partially under program control, wherein an activating circuit (7,7',13,23) is connected with the electronic device (1,1',1",2") and said activating circuit (7,7',13,23) sets up a communication with and transmits data and/or code to said electronic device (1,1',1",2"), characterized in that said activating circuit (7,7',13,23) receives an identification code from the electronic device (1,1',1",2") and (12.1) stores said received identification code in an erasable memory the first time it receives such identification code, (12.2) otherwise compares the received identification code with the stored identification code and transmits data and/or code only if said identification codes are equal.

13. Method according to claim 12, characterized in that said activating circuit (7,7',13,23) receives a status code from said electronic device (1,1',1",2") and transmits data and/or code only if said status code indicates a lower revision number or an earlier date than an update code stored in said activating circuit (7,7',13,23).

## Patentansprüche

1. Aktivierungsschaltung (7, 7', 13, 23) für ein elektronisches Gerät (1,1',1",2"), wobei das elektronische Gerät (1, 1', 1", 2") einen Prozessor und einen Speicher enthält und zumindest teilweise unter einer Programmsteuerung arbeitet, wobei die Aktivierungsschaltung (7, 7', 13, 23) folgende Merkmale aufweist:
(1.1) einen Prozessor,
(1.2) einen nichtflüchtigen löschbaren Speicher,
(1.3) eine Verbindungseinrichtung (10, 11, 12, 17-19, 22) zum Verbinden der Aktivierungsschaltung (7, 7', 13, 23) mit dem elektronischen Gerät (1, 1',1",2"),
(1.4) ein Programm, das in dem nichtflüchtigen löschbaren Speicher gespeichert ist, wobei das Programm die Aktivierungsschaltung (7, 7', 13, 23) steuert und folgendes enthält:
(1.4.1) ein erstes Modul (24), das eine Kommunikation mit dem elektronischen Gerät (1, 1', 1'', 2'') einstellt,
(1.4.2) ein zweites Modul (25), das eingestellt ist, um Daten und/oder Code zu dem elektronischen Gerät (1, 1', 1'', 2'') zu übertragen,
dadurch gekennzeichnet, daß
(1.5) das erste Modul (24) eingestellt ist, um einen Identifikationscode (32) von dem elektronischen Gerät (1, 1', 1'', 2'') zu empfangen,
(1.6) das erste Modul (24) eingestellt ist, um den Identifikationscode (34) in dem nichtflüchtigen löschbaren Speicher zu speichern, wenn es zum erstenmal einen derartigen Identifikationscode empfängt, und
(1.7) das erste Modul (24) ferner eingestellt ist, um nur den gespeicherten Identifikationscode anzunehmen, und um zu verhindern, daß das zweite Modul (25) Daten und/oder Codes zu dem elektronischen Gerät überträgt, wenn der gespeicherte Identifikationscode und der empfangene Identifikationscode ungleich sind.

2. Aktivierungsschaltung (7, 7', 13, 23) für ein elektronisches Gerät (1, 1', 1'', 2''), wobei das elektronische Gerät (1, 1', 1'', 2'') einen Prozessor und einen Speicher enthält und zumindest teilweise unter einer Programmsteuerung arbeitet, wobei die Aktivierungsschaltung (7, 7', 13, 23) folgende Merkmale aufweist:
(2.1) einen Prozessor,
(2.2) einen nichtflüchtigen löschbaren Speicher,
(2.3) eine Verbindungseinrichtung (10, 11, 12, 17-19, 22) zum Verbinden der Aktivierungsschaltung (7, 7', 13, 23) mit dem elektronischen Gerät (1, 1', 1'', 2''),
(2.4) ein Programm, das in dem nichtflüchtigen löschbaren Speicher gespeichert ist, wobei das Programm die Aktivierungsschaltung (7, 7', 13, 23) steuert und folgendes enthält:
(2.4.1) ein erstes Modul (24), das eine Kommunikation mit dem elektronischen Gerät (1, 1', 1'', 2'') einstellt,
(2.4.2) ein zweites Modul (25), das eingestellt ist, um Daten und/oder Code zu dem elektronischen Gerät (1, 1', 1'', 2'') zu übertragen,
dadurch gekennzeichnet, daß
(2.5) das erste Modul (24) eingestellt ist, um einen Identifikationscode (32) von dem elektronischen Gerät (1, 1', 1'', 2'') zu empfangen,
(2.6) das erste Modul (24) eingestellt ist, um den Identifikationscode (34) in dem nichtflüchtigen löschbaren Speicher zu speichern, wenn es einen derartigen Identifikationscode zum erstenmal empfängt,
(2.7) das zweite Modul (25) eingestellt ist, um die übertragenen Daten und/oder den Code abhängig von dem Identifikationscode, der durch das erste Modul (24) in dem nichtflüchtigen löschbaren Speicher gespeichert ist, zu codieren.

3. Aktivierungsschaltung gemäß Anspruch 1 oder 2, dadurch gekennzeichnet, daß das zweite Modul eingestellt ist, um einen Programmcode zu dem elektronischen Gerät (1, 1', 1'', 2'') zu übertragen.

4. Aktivierungsschaltung gemäß Anspruch 1 oder 2, dadurch gekennzeichnet, daß das zweite Modul eingestellt ist, um einen Aktivierungscode zu dem elektronischen Gerät (1, 1', 1'', 2'') zu übertragen.

5. Aktivierungsschaltung gemäß Anspruch 1 oder 2, dadurch gekennzeichnet, daß das zweite Modul eingestellt ist, um einen Testcode oder ein Programm zu dem elektronischen Gerät (1, 1', 1'', 2'') zu übertragen.

6. Aktivierungsschaltung gemäß mindestens einem der Ansprüche 1 bis 5, dadurch gekennzeichnet, daß das erste Modul (24) eingestellt ist, um einen Zustandscode (28) von dem elektronischen Gerät (1, 1', 1'', 2'') zu empfangen, um den Zustandscode mit einem gespeicherten Aktualisierungscode (30) zu vergleichen und um die Steuerung nur auf das zweite Modul (25) zu übergeben, wenn der Zustandscode in einer vorbestimmten Beziehung zu dem Aktualisierungscode steht.

7. Aktivierungsschaltung gemäß Anspruch 6, dadurch gekennzeichnet, daß das erste Modul (24) die Steuerung nur auf das zweite Modul (25) übergibt, wenn der Zustandscode eine niedrigere Revisionsnummer oder ein früheres Datum als der Aktualisierungscode anzeigt.

8. Aktivierungsschaltung gemäß mindestens einem der vorhergehenden Ansprüche, dadurch gekennzeichnet, daß die Aktivierungsschaltung (7, 7') in einem Gehäuse enthalten ist, und daß die Verbindungseinrichtung ein Kabel (8) aufweist.

9. Aktivierungsschaltung gemäß Anspruch 8, dadurch gekennzeichnet, daß die Aktivierungsschaltung (7, 7') einen Mikroprozessor aufweist, der vorzugsweise vom Ein-Chip-Typ mit integriertem, nichtflüchtigem, löschbarem Speicher ist.

10. Aktivierungsschaltung gemäß mindestens einem der Ansprüche 1 bis 7, dadurch gekennzeichnet, daß die Aktivierungsschaltung einen Computer (13), vorzugsweise einen Personalcomputer, aufweist und daß die Verbindungseinrichtung ein Telefon oder eine drahtlose Übertragungsvorrichtung aufweist.

11. Aktivierungsschaltung gemäß mindestens einem der Ansprüche 1 bis 7, dadurch gekennzeichnet, daß das Aktivierungsgerät einen integrierten Mikroprozessor (23) aufweist und daß die Verbindungseinrichtung eine Mehrzahl von Anschlußstiften des integrierten Mikroprozessors (23) zum Einsetzen in einen Sockel (22) in dem elektronischen Gerät (2'') aufweist.

12. Verfahren zum Aktivieren oder Hinzufügen neuer Fähigkeiten zu einem elektronischen Gerät (1, 1', 1'', 2''), das zumindest teilweise unter einer Programmsteuerung arbeitet, bei dem eine Aktivierungsschaltung (7, 7', 13, 23) mit dem elektronischen Gerät (1, 1', 1'', 2'') verbunden ist, wobei die Aktivierungsschaltung (7, 7', 13, 23) eine Verbindung mit dem elektronischen Gerät (1, 1', 1'', 2'') eingestellt und Daten und/oder Code zu demselben überträgt, dadurch gekennzeichnet, daß die Aktivierungsschaltung (7, 7', 13, 23) einen Identifikationscode von dem elektronischen Gerät (1, 1', 1'', 2'') empfängt, und
(12.1) den empfangenen Identifikationscode in einem löschbaren Speicher speichert, wenn dieselbe zum erstenmal einen derartigen Identifikationscode empfängt,
(12.2) anderenfalls den empfangenen Identifikationscode mit dem gespeicherten Identifikationscode vergleicht und Daten und/oder Code nur überträgt, wenn die Identifikationscodes gleich sind.

13. Verfahren gemäß Anspruch 12, dadurch gekennzeichnet, daß die Aktivierungsschaltung (7, 7', 13, 23) einen Zustandscode von dem elektronischen Gerät (1, 1', 1'', 2'') empfängt und Daten und/oder Code nur überträgt, wenn der Zustandscode eine niedrigere Revisionsnummer oder ein früheres Datum als ein Aktualisierungscode anzeigt, der in der Aktivierungsschaltung (7, 7', 13, 23) gespeichert ist.

## Revendications

1. Circuit d'activation (7,7', 13,23)destiné à un appareil électronique (1, 1', 1",2"), ledit appareil électronique (1, 1', 1",2") contenant un processeur et une mémoire et fonctionnant au moins partiellement sous le contrôle d'un programme, ledit circuit d'activation (7,7',13,23) comprenant:
(1.1) un processeur,
(1.2) une mémoire non volatile effaçable,
(1.3) des moyens de connexion (10,11,12,17-19,22) pour connecter ledit circuit d'activation (7,7',13,23) audit appareil électronique (1,1',1",2"),
(1.4) un programme stocké dans ladite mémoire non volatile effaçable, ledit programme contrôlant ledit circuit d'activation (7,7',13,23) et contenant :
(1.4.1) un premier module (24) établissant une communication avec ledit appareil électronique (1, 1', 1", 2"),
(1.4.2) un second module (25) configuré pour transmettre des données et/ou un code audit appareil électronique (1, 1', 1", 2"),
caractérisé en ce que
(1.5) ledit premier module (24) est configuré pour recevoir un code d'identification (32) venant dudit appareil électronique (1,1', 1", 2"),
(1.6) ledit premier module (24) est configuré pour stocker ledit code d'identification (34) dans ladite mémoire non volatile effaçable lorsqu'il reçoit ce code d'identification pour la première fois, et
(1.7) ledit premier module (24) est en outre configuré pour accepter seulement le code d'identification stocké dans la mémoire et pour empêcher ledit second module (25) de transmettre des données et/ou un code audit appareil électronique si le code d'identification stocké en mémoire et le code d'identification reçu ne sont pas égaux.

2. Circuit d'activation (7,7',13,23) destiné à un appareil électronique (1,1',1",2"), ledit appareil électronique (1,1',1",2") contenant un processeur et une mémoire et fonctionnant au moins partiellement sous le contrôle d'un programme, ledit circuit d'activation (7,7',13,23) comprenant:
(2.1) un processeur,
(2.2) une mémoire non volatile effaçable,
(2.3) des moyens de connexion (10,11,12,17-19,22) pour connecter ledit circuit d'activation (7,7',13,23) audit appareil électronique (1,1', 1", 2"),
(2.4) un programme stocké dans ladite mémoire non volatile effaçable, ledit programme contrôlant ledit circuit d'activation (7,7',13,23) et contenant :
(2.4.1) un premier module (24) établissant une communication avec ledit appareil électronique (1,1',1",2"),
(2.4.2) un second module (25) configuré pour transmettre des données et/ou du code audit appareil électronique (1,1',1",2"),
caractérisé en ce que
(2.5) ledit premier module (24) est configuré pour recevoir un code d'identification (32) venant dudit appareil électronique (1,1',1",2"),
(2.6) ledit premier module (24) est configuré pour stocker ledit code d'identification (34) dans ladite mémoire non volatile effaçable lorsqu'il reçoit ce code d'identification pour la première fois,
(2.7) ledit second module (25) est configuré pour coder les données et/ou le code transmis en fonction du code d'identification stocké par ledit premier module (24) dans ladite mémoire non volatile effaçable.

3. Circuit d'activation selon la revendication 1 ou 2, caractérisé en ce que ledit second module est configuré pour transmettre du code de programme audit appareil électronique (1,1',1",2").

4. Circuit d'activation selon la revendication 1 ou 2, caractérisé en ce que ledit second module est configuré pour transmettre un code d'activation audit appareil électronique (1,1',1",2")

5. Circuit d'activation selon la revendication 1 ou 2, caractérisé en ce que ledit second module est configuré pour transmettre un code ou un programme de test audit appareil électronique (1,1',1",2").

6. Circuit d'activation selon l'une au moins des revendications 1 à 5, caractérisé en ce que ledit premier module (24) est configuré pour recevoir un code d'état (28) en provenance dudit appareil électronique (1,1',1",2"), pour comparer ledit code d'état avec un code de mise à jour (30) stocké en mémoire et pour transférer le contrôle audit second module (25) seulement si ledit code d'état se trouve dans un rapport prédéfini avec ledit code de mise à jour.

7. Circuit d'activation selon la revendication 6, caractérisé en ce que ledit premier module (24) transfère le contrôle audit second module (25) seulement lorsque ledit code d'état indique un indice de révision inférieur ou une date antérieure par rapport audit code de mise à jour.

8. Circuit d'activation selon l'une au moins des revendications précédentes, caractérisé en ce que ledit circuit d'activation (7,7') est contenu dans un boîtier et que lesdits moyens de connexion comprennent un câble (8).

9. Circuit d'activation selon la revendication 8, caractérisé en ce que ledit circuit d'activation (7,7') comprend un microprocesseur, préférentiellement du type àun seul circuit intégré, avec une mémoire non volatile effaçable intégrée.

10. Circuit d'activation selon l'une au moins des revendications 1 à 7, caractérisé en ce que ledit circuit d'activation comprend un ordinateur (13), de préférence un ordinateur personnel, et que lesdits moyens de connexion cqmprennent un téléphone ou un émetteur radio.

11. Circuit d'activation selon l'une au moins des revendications 1 à 7, caractérisé en ce que ledit circuit d'activation comprend un microprocesseur intégré (23) et que lesdits moyens de connexion comprennent une multiplicité de broches dudit microprocesseur intégré (23) destinées à s'enficher sur un support (22) dans ledit appareil électronique (2").

12. Méthode permettant d'activer, ou d'ajouter de nouvelles fonctionnalités à, un appareil électronique (1,1',1",2") fonctionnant au moins partiellement sous le contrôle d'un programme, dans laquelle un circuit d'activation (7,7',13,23) est relié à l'appareil électronique (1,1',1",2") et ledit circuit d'activation (7,7',13,23) établit une communication avec, et transmet des données et/ou du code audit appareil électronique (1,1',1",2"), caractérisée en ce que ledit circuit d'activation (7, 7', 13,23) reçoit un code d'identification en provenance de l'appareil électronique (1,1',1",2") et
(12.1) stocke ledit code d'identification reçu dans une mémoire effaçable lorsqu'il reçoit un tel code d'identification pour la première fois,
(12.2) compare par ailleurs le code d'identification reçu avec le code d'identification stocké en mémoire et transmet des données et/ou du code seulement si lesdits codes d'identification sont égaux.

13. Méthode selon la revendication 12, caractérisée en ce que ledit circuit d'activation (7,7',13,23) reçoit un code d'état en provenance dudit appareil électronique (1,1',1",2") et transmet des données et/ou du code seulement lorsque ledit code d'état indique un indice de révision inférieur ou une date antérieure par rapport à un code de mise à jour stocké dans ledit circuit d'activation (7,7',13,23).
